# EUROPEAN PATENT APPLICATION

(11) **EP 4 809 809 A1**
(43) Date of publication of application: **23.09.2026**
(21) Application number: 25185450.1
(22) Date of filing: 26.06.2025
(51) Int. Cl.: A01D 34/67, A01D 34/82

(54) **WALK-BEHIND MOWER**

(30) Priority: 19.03.2025 CN 202520486663 U; 19.03.2025 CN 202520482669 U
(71) Applicant: Nanjing Chervon Industry Co., Ltd., Nanjing, Jiangsu 211106 (CN)
(72) Inventor: WANG, Kang, Nanjing, Jiangsu 211106 (CN); ZHU, Zihang, Nanjing, Jiangsu 211106 (CN); LI, Siyi, Nanjing, Jiangsu 211106 (CN); NIU, Tianwei, Nanjing, Jiangsu 211106 (CN)
(74) Representative: Sun, Yiming

(57) **Abstract**

Provided is a walk-behind mower. The walk-behind mower includes a body including a traveling assembly and a cutting assembly; an operating device electrically connected to the body, wherein the operating device includes a switch box; and a grass collecting basket selectively connected to the body and configured to collect grass clippings generated by cutting, wherein the length of the grass collecting basket in the lateral direction of the walk-behind mower is the width of the grass collecting basket. The walk-behind mower further includes a mounting assembly including at least one protrusion disposed on the switch box and used for mounting an attachment, wherein the span of the mounting assembly in the lateral direction of the walk-behind mower is greater than or equal to 5 cm and less than the width of the grass collecting basket.

## Description

### RELATED APPLICATION INFORMATION

This application claims the benefit of Chinese Patent Application No. CN 202520486663.2, filed on March 19, 2025, and Chinese Patent Application No. CN 202520482669.2, filed on March 19, 2025, the disclosures of which are incorporated herein by reference in their entireties.

### TECHNICAL FIELD

The present application relates to a power tool and, in particular, to a walk-behind mower.

### BACKGROUND

A power tool is a type of power device that usually integrates a motor, an output assembly, and a control board including electronic components within a housing for use. The output assembly is used for performing operations. The motor includes a motor shaft, and the motor shaft can rotate about the axis of the motor to drive the wheels to drive the operating device to move. Alternatively, the motor shaft drives the output assembly to perform operations. In practical application, with different output assemblies interchanged, the operating device may form a mower, a snow thrower, a rammer, a sprinkler truck, a pressure washer, a sawmill, and the like, which play important roles across multiple fields including gardening, building, agriculture, and daily life.

As a type of power device, the mower is used for trimming the lawn or performing grass cutting operations. However, when the user is using the mower, the user's items and other attachments cannot be hung on the mower, resulting in lower convenience of use. Moreover, when the mower is stored after use, the grass collecting basket cannot be hung on the mower and needs to be stored separately, making it inconvenient to put the grass collecting basket away.

As a type of power device, the mower is used for trimming the lawn or performing grass cutting operations. When the mower is working, the mower is operated by controlling two triggers, one trigger is used for controlling the operation of the traveling assembly, and the other trigger is used for controlling the operation of the cutting assembly. When the user operates the triggers to work, the comfort in operating the triggers is relatively poor, and the hands are easily fatigued after long-term operation.

This part provides background information related to the present application, and the background information is not necessarily the existing art.

### SUMMARY

An object of the present application is to solve or at least alleviate part or all of the preceding problems. To achieve the object, the present application adopts the technical solutions below.

A walk-behind mower includes a body including a traveling assembly and a cutting assembly; an operating device electrically connected to the body to allow a user to operate the walk-behind mower on the rear side of the walk-behind mower, where the operating device includes a switch box, where an electronic component at least for controlling the working state of the cutting assembly is provided in the switch box; and a grass collecting basket selectively connected to the body and configured to collect grass clippings generated by cutting, where the length of the grass collecting basket in the lateral direction of the walk-behind mower is the width of the grass collecting basket. The walk-behind mower further includes a mounting assembly including at least one protrusion disposed on the switch box and used for mounting an attachment, where the span of the mounting assembly in the lateral direction of the walk-behind mower is greater than or equal to 5 cm and less than the width of the grass collecting basket.

In some examples, the protrusion includes a stiffener, and the load-bearing capacity of the protrusion is greater than or equal to 1 kg.

In some examples, the mounting assembly includes two protrusions, and the distance between the two protrusions is greater than 5 cm.

In some examples, each dimension of the protrusion is less than or equal to 10 cm.

In some examples, the mounting assembly is symmetrical about the centerline of the switch box and is disposed on the back side of the switch box, and the back side faces the user.

In some examples, the switch box includes a housing, and the at least one protrusion is integrally formed with the housing.

In some examples, the switch box is T-shaped and includes a cross beam, and the at least one protrusion is disposed on the cross beam.

In some examples, the included angle between the protrusion and a plane where the switch box is located is greater than or equal to 0° and less than or equal to 90°.

In some examples, the grass collecting basket includes a frame, and the frame is capable of being hung on the mounting assembly.

In some examples, the operating device is disposed on a connecting rod assembly of the walk-behind mower, the connecting rod assembly is foldable to a storage state, and when the walk-behind mower is in the storage state, the grass collecting basket is hung on the mounting assembly and a rear opening of the grass collecting basket faces upward.

A walk-behind mower includes a body including a traveling assembly and a cutting assembly; an operating device electrically connected to the body to allow a user to operate the walk-behind mower on the rear side of the walk-behind mower, where the operating device includes a switch box, where electronic components for controlling the working states of the cutting assembly and the traveling assembly are provided in the switch box; a first trigger configured to be operated by the user to rotate about a first pivot axis; and a second trigger configured to be operated by the user to rotate about a second pivot axis. The second pivot axis is basically parallel to the first pivot axis, the first trigger and the second trigger are configured to control the cutting assembly and the traveling assembly, respectively, at least one of the first trigger or the second trigger is completely disposed on a side of a center plane of the switch box, and the length of the grip of each of the first trigger and the second trigger in the lateral direction of the walk-behind mower is greater than or equal to 5 cm.

In some examples, the operating device includes two second triggers, and the two second triggers are located on the left and right sides of the center plane of the switch box, respectively.

In some examples, the length of the second trigger in the lateral direction of the walk-behind mower is less than or equal to 10 cm.

In some examples, the operating device further includes a speed control knob disposed between the two second triggers.

In some examples, the length of the first trigger in the lateral direction of the walk-behind mower is greater than or equal to 30 cm, and the first trigger is symmetrical about the center plane.

In some examples, the switch box is T-shaped and includes a cross beam, and the first trigger or the second trigger is pivotally mounted to the cross beam.

In some examples, when each of the first trigger and the second trigger is at the maximum angle of rotation, the first trigger and the second trigger can be held by the user with one hand at the same time.

In some examples, the walk-behind mower includes a connecting rod assembly, and the connecting rod assembly includes two first rods connected to the body and a second rod connecting the two first rods.

In some examples, the maximum angles of rotation of the first trigger and the second trigger are both limited by the second rod.

In some examples, the first trigger and/or the second trigger are paddles.

A walk-behind mower includes a body including a traveling assembly and a cutting assembly; a connecting rod assembly including two first rods connected to the body and a second rod connecting the two first rods; an operating device electrically connected to the body to allow a user to operate the walk-behind mower on the rear side of the walk-behind mower, where the operating device includes a switch box mounted to the connecting rod assembly, where electronic components for controlling the working states of the cutting assembly and the traveling assembly are provided in the switch box; a first trigger configured to be operated by the user to rotate about a first pivot axis; and a second trigger configured to be operated by the user to rotate about a second pivot axis. The second pivot axis is basically parallel to the first pivot axis, the first trigger and the second trigger are configured to control the cutting assembly and the traveling assembly, respectively, at least one of the first trigger or the second trigger is completely disposed on a side of a center plane of the switch box, and the maximum angles of rotation of the first trigger and the second trigger are both limited by the second rod.

In some examples, the first trigger and the second trigger have opposite directions of rotation.

In some examples, the maximum angles of rotation of the first trigger and the second trigger are each less than or equal to 90°.

In some examples, the first trigger and the second trigger are disposed on two sides of the plane where the switch box is located, respectively.

In some examples, when each of the first trigger and the second trigger is at the maximum angle of rotation, the first trigger and the second trigger can be held by the user with one hand at the same time.

In some examples, the curvature of at least one of the first trigger and the second trigger is similar to the curvature of at least part of the second rod.

In some examples, at least one of the first trigger and the second trigger is made of plastic.

In some examples, the length of the grip of each of the first trigger and the second trigger in the lateral direction of the walk-behind mower is greater than or equal to 5 cm.

### BRIEF DESCRIPTION OF DRAWINGS

FIG. 1 is a front view of a walk-behind mower in an example of the present application.
FIG. 2 is a bottom view of a walk-behind mower in an example of the present application.
FIG. 3 is a schematic view of a walk-behind mower in an example of the present application.
FIG. 4 is a front view of a connecting rod assembly in an example of the present application.
FIG. 5 is an enlarged view of part A of FIG. 4.
FIG. 6 is a rear view of a connecting rod assembly in an example of the present application.
FIG. 7 is an enlarged view of part B of FIG. 6.
FIG. 8 is a schematic view of a walk-behind mower and a grass collecting basket in an example of the present application.
FIG. 9 is an enlarged view of part C of FIG. 8.
FIG. 10 is a schematic view of a connecting rod assembly at a storage position in an example of the present application.
FIG. 11 is an enlarged view of part D of FIG. 10.
FIG. 12 is a schematic view of a connecting rod assembly at a working position in an example of the present application.
FIG. 13 is an enlarged view of part E of FIG. 12.
FIG. 14 is a schematic view illustrating that a battery compartment assembly and a body are combined in an example of the present application.
FIG. 15 is another schematic view illustrating that a battery compartment assembly and a body are combined in an example of the present application.

### Reference list

- 500: walk-behind mower
- 50: body
- 501: cutting assembly
- 502: battery compartment assembly
- 5021: screw
- 503: traveling assembly
- 51: connecting rod assembly
- 511: first rod
- 5111: switch trigger
- 512: second rod
- 52: operating device
- 521: switch box
- 5211: housing
- 52111: upper housing
- 52112: lower housing
- 5212: cross beam
- 5213: center plane
- 522: first trigger
- 523: second trigger
- 524: wire harness
- 525: speed control knob
- 526: first pivot axis
- 527: second pivot axis
- 53: mounting assembly
- 531: protrusion
- 54: safety switch
- 541: lever
- 542: elastic member
- 55: grass collecting basket
- 551: frame

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

A power tool is a device that outputs power. In an example, the power tool may be configured to perform a specific operation (for example, cutting). In another example, the power tool may output only power, for example, output only rotational torque, but not limited to perform a specific operation. However, it is to be understood that the present application is not limited to the disclosed examples but may be applied to other types of power tools, for example, a drill, a hedge trimmer, or a sander. Alternatively, the power tool may be a table tool, for example, a table saw or a miter saw. Alternatively, the power tool may be a push power tool, for example, a push mower or a push snow thrower. Alternatively, the power tool may be a riding power tool, for example, a riding mower, a riding vehicle, or an all-terrain vehicle. Alternatively, the power tool may be a robotic tool, for example, a robotic mower or a robotic snow thrower. In some examples, the power tool may be an electric drill, an electric vehicle, or the like. In some examples, the power tool may be a garden tool, for example, a hedge trimmer, a blower, a mower, or a chainsaw. Alternatively, the power tool may be a decorating tool, for example, a screwdriver, a circular saw, or a sander. In some examples, the power tool may be a vegetation care tool, for example, a string trimmer, a mower, a hedge trimmer, or a chainsaw. Alternatively, the power tool may be a cleaning tool, for example, a blower, a snow thrower, or a cleaning machine. Alternatively, the power tool may be a drilling tool, for example, the drill, the screwdriver, a wrench, or an electric hammer. Alternatively, the power tool may be a sawing tool, for example, a reciprocating saw, a jigsaw, or a circular saw. Alternatively, the power tool may be a table tool, for example, a table saw, a miter saw, a metal cutter, or an electric router. Alternatively, the power tool may be a grinding tool, for example, an angle grinder or a sander. Alternatively, the power tool may be another tool, for example, a machine tool or a fan.

A wheeled power tool is driven by wheels and uses an electric motor as a driving member to drive a functional piece to perform corresponding work, such as an electric wheeled mower, a snow thrower, or a street sweeper. The wheeled power tool mainly includes a working assembly and a traveling assembly. The working assembly includes a functional piece and a working electric motor that drives the functional piece to work. The traveling assembly includes traveling wheels and a traveling electric motor that drives the traveling wheels to travel. In some examples, the functional piece may be a disc broom driven by the working electric motor to clean snow or dust. The functional piece may be a blade driven by the working electric motor to cut grass or trim the lawn.

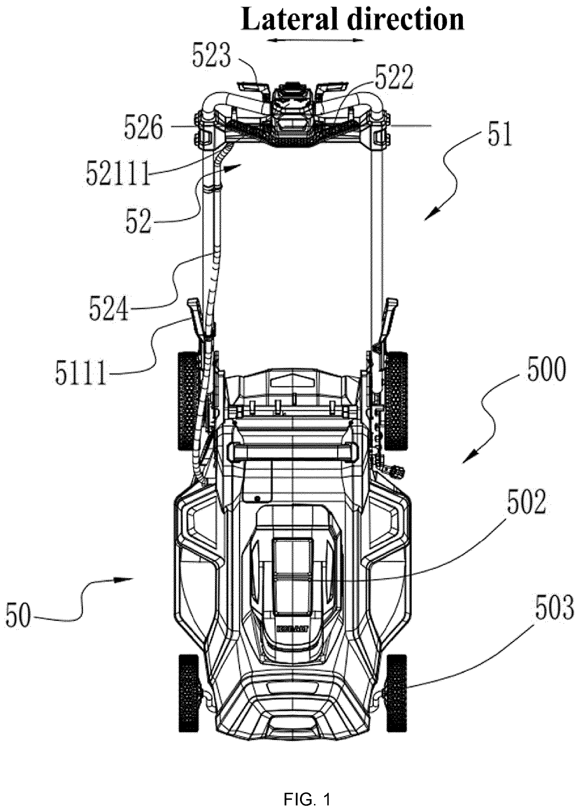

The walk-behind mower is widely used in daily life as a wheeled power tool. To mount or hang attachments such as user's items on the walk-behind mower and facilitate the placement of a grass collecting basket, as shown in FIGS. 1 to 15, the present application provides a walk-behind mower 500. The walk-behind mower 500 includes a body 50, an operating device 52, a grass collecting basket 55, and a mounting assembly 53.

The body 50 includes a traveling assembly 503 and a cutting assembly 501. The operating device 52 is electrically connected to the body 50 to allow the user to operate the walk-behind mower 500 on the rear side of the walk-behind mower 500. The operating device 52 includes a switch box 521, and an electronic component at least for controlling the working state of the cutting assembly 501 is provided in the switch box 521. The grass collecting basket 55 is selectively connected to the body 50 and configured to collect grass clippings generated by cutting. The length of the grass collecting basket 55 in the lateral direction of the walk-behind mower 500 is the width of the grass collecting basket 55. The mounting assembly 53 includes at least one protrusion 531 disposed on the switch box 521 and used for mounting an attachment. The span of the mounting assembly 53 in the lateral direction of the walk-behind mower 500 is greater than or equal to 5 cm and less than the width of the grass collecting basket 55.

In some examples, the span of the mounting assembly 53 in the lateral direction of the walk-behind mower 500 may be 5 cm, 7 cm, 9 cm, 11 cm, 13 cm, 15 cm, or the like. The mounting assembly 53 is designed according to the lateral length of the walk-behind mower 500 and the width of the grass collecting basket 55 so that the user can hang or mount an attachment such as an item at will, and the hung attachment is stable and not easily lifted up at one of two ends. When the mounting assembly 53 includes only one protrusion 531, the span of the mounting assembly 53 in the lateral direction of the walk-behind mower 500 is the width of the protrusion 531.

By providing the protrusion 531 on the switch box 521, the attachment can be mounted. During use, the user only needs to mount the attachment such as the item on the protrusion 531 to ensure the convenience of use of the walk-behind mower 500. The span of the mounting assembly 53 in the lateral direction of the walk-behind mower 500 is less than the width of the grass collecting basket 55. When the walk-behind mower 500 is in a storage state, the grass collecting basket 55 can be hung on the walk-behind mower 500 using the mounting assembly 53, thereby facilitating the placement of the grass collecting basket 55. Since the protrusion 531 is located on the switch box 521 and the switch box 521 is adjacent to the operating side of the user, it is convenient for the user to hang or mount the attachment on the protrusion 531 and access the attachment.

In some examples, the protrusion 531 includes a stiffener, and the load-bearing capacity of the protrusion 531 is greater than or equal to 1 kg. The load-bearing capacity of the protrusion 531 may be 2 kg, 3 kg, 4 kg, 5 kg, or the like. The load-bearing capacity of the protrusion 531 may be designed according to the model and weight of the walk-behind mower 500, and no further restrictions are imposed herein. By providing the stiffener, the strength of the protrusion 531 can be improved, thereby preventing the protrusion 531 from being deformed or even damaged when a heavier attachment is hung or mounted on the protrusion 531.

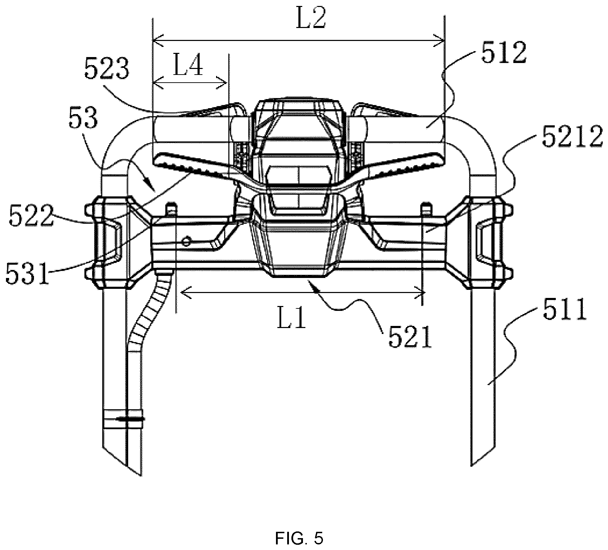

As shown in FIG. 5, in some examples, the mounting assembly 53 includes two protrusions 531, and the distance L1 between the two protrusions 531 is greater than 5 cm. The distance L1 between the two protrusions 531 may be 6 cm, 7 cm, 8 cm, 9 cm, 10 cm, 11 cm, or the like, and no further restrictions are imposed herein. By providing two protrusions 531 on the switch box 521, the number of hanging installation points can be increased so that more attachments such as items can be mounted. The two protrusions 531 are spaced apart so that a gap is formed between the protrusions 531, thereby facilitating the placement of items on the two protrusions 531.

As shown in FIG. 5, in some examples, the mounting assembly 53 is symmetrical about the centerline of the switch box 521 and is disposed on the back side of the switch box 521, and the back side faces the user. The symmetrical design of the mounting assembly 53 on the switch box 521 ensures aesthetics. Furthermore, since the mounting assembly 53 is located on a side of the switch box 521 facing the user, it is convenient for the user to place or access attachments.

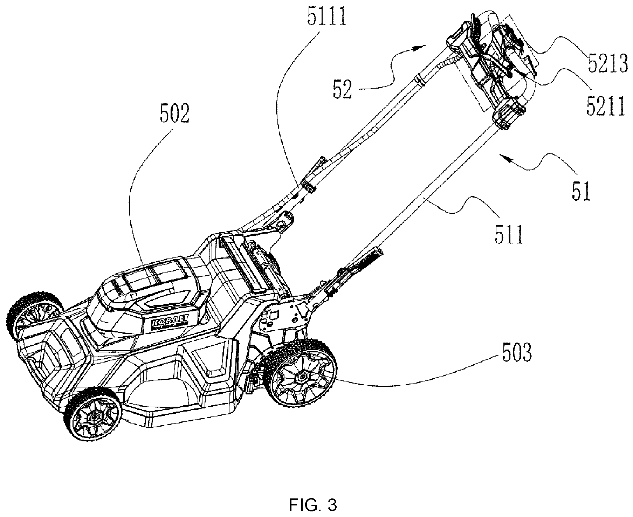

As shown in FIG. 3, in some examples, the switch box 521 includes a housing 5211, and the protrusion 531 is integrally formed with the housing 5211. By adopting the integral molding process, the manufacturing of the protrusion 531 and the housing 5211 is facilitated, the subsequent assembly processes are reduced, and the strength of the connection between the protrusion 531 and the housing 5211 can be ensured. The protrusion 531 and the housing 5211 may both be made of plastic and integrally formed through an injection molding process. In some other examples, the protrusion 531 may be mounted on the housing 5211 through fixation by a screw 5021. When the protrusion 531 is damaged, the protrusion 531 is easy to replace.

As shown in FIG. 5, in some examples, the switch box 521 is T-shaped and includes a cross beam 5212, and the protrusions 531 are disposed on the cross beam 5212. Since the cross beam 5212 faces the user's body and is relatively long, the protrusions 531 are disposed on the cross beam 5212 so that it is convenient for the user to hang or access items.

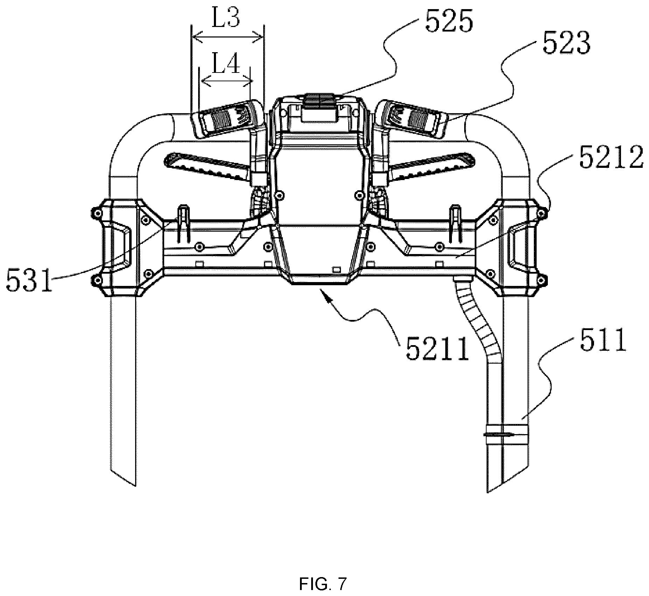

As shown in FIGS. 5 and 7, in some examples, the protrusions 531 protrude relative to the housing 5211 of the switch box 521 to form hanging installation points. When the user is operating the walk-behind mower 500, the user can easily hang items on the protrusions 531 or remove items from the protrusions 531 so that the protrusions 531 are convenient for the user to use. The protrusion 531 may be a hook so that it is convenient for the user to hang an item such as a bag or a hat on the protrusion 531. A cup holder may be mounted on the protrusion 531, and a cup may be placed in the cup holder so that the user can carry water while working. A storage frame may be mounted on the protrusion 531 so that the user can place personal belongings such as a mobile phone in the storage frame.

In some examples, the included angle between the protrusion 531 and a plane where the switch box 521 is located is greater than or equal to 0° and less than or equal to 90°. The included angle between the protrusion 531 and the plane where the switch box 521 is located may be 10°, 20°, 30°, 40°, 50°, 60°, 70°, 80°, or 90°. The angle between the protrusion 531 and the switch box 521 may be flexibly set according to the use scenario of the walk-behind mower 500, and no further restrictions are imposed herein. When the included angle between the protrusion 531 and the plane where the switch box 521 is located is an acute angle, a wedge-shaped space is formed. When an item is hung on the protrusion 531, the item can be effectively prevented from falling due to the vibration generated by the operation of the walk-behind mower 500.

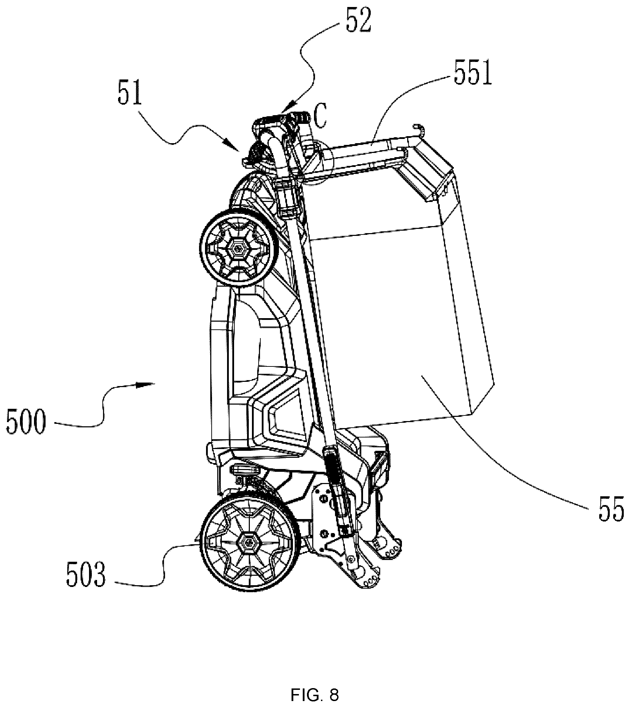

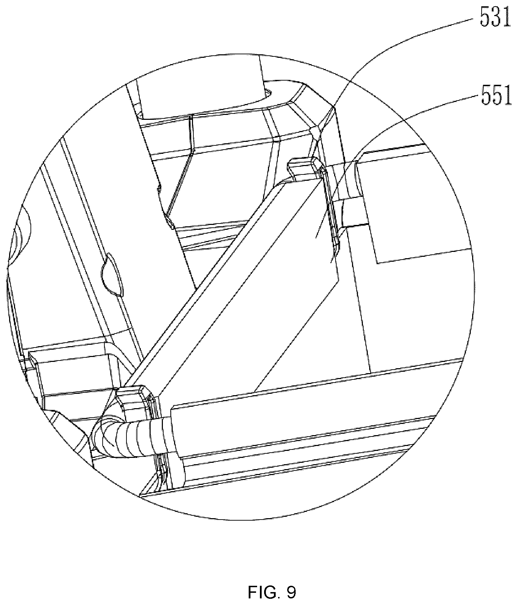

As shown in FIGS. 8 and 9, in some examples, the grass collecting basket 55 includes a frame 551, and the frame 551 is capable of being hung on the mounting assembly 53. The grass collecting basket 55 has the frame 551 which can support the grass collecting basket 55. When the grass collecting basket 55 is mounted on the walk-behind mower 500 for use, the opening of the grass collecting basket 55 is ensured to be in a stable open state, thereby facilitating the collection of grass clippings. Furthermore, when the walk-behind mower 500 is in the storage state, the grass collecting basket 55 may be hung on the mounting assembly 53 through the frame 551, thereby facilitating the placement of the grass collecting basket 55.

As shown in FIG. 8, in some examples, the operating device 52 is disposed on a connecting rod assembly 51 of the walk-behind mower 500, the connecting rod assembly 51 can be folded, and when the walk-behind mower 500 is in the storage state, the switch box 521 is basically perpendicular to the ground, and the grass collecting basket 55 is hung with the opening facing upward. The connecting rod assembly 51 includes two first rods 511 connected to the body 50 and a second rod 512 connecting the two first rods 511, and the operating device 52 is disposed on the second rod 512. When the walk-behind mower 500 is working, the connecting rod assembly 51 is in an extended state, and the second rod 512 is located on the rear side of the walk-behind mower 500 so that the user can push the walk-behind mower 500 to work. After the walk-behind mower 500 is used, the connecting rod assembly 51 is folded to the storage state so that the storage space occupied by the walk-behind mower 500 can be reduced. When the walk-behind mower 500 is in the storage state, the opening of the hung grass collecting basket 55 faces upward so that the grass collecting basket 55 can be used to hold items.

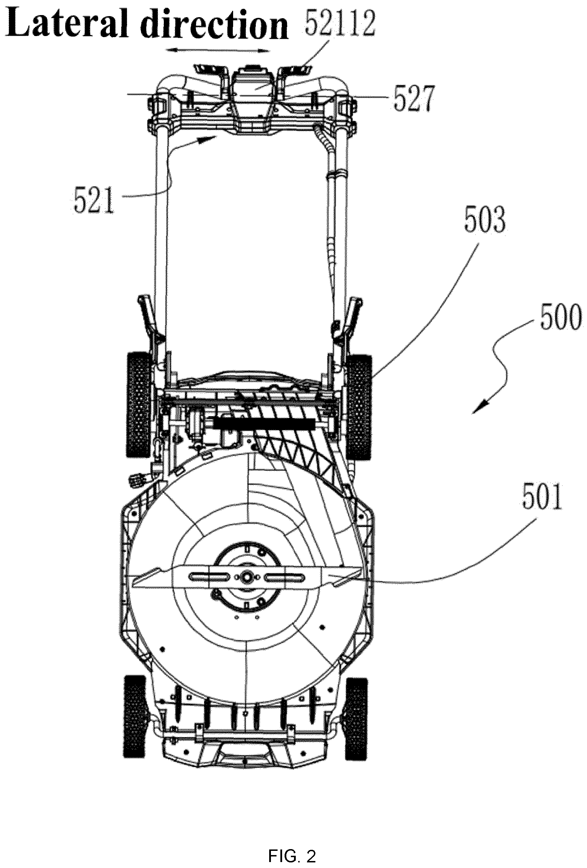

As shown in FIGS. 1 and 2, in some examples, the switch box 521 includes an upper housing 52111 and a lower housing 52112 that mate with each other, and a mounting portion 531 is formed on the lower housing 52112 or the upper housing 52111. By designing the switch box 521 as a structure in which the upper housing 52111 and the lower housing 52112 are mounted through snap-fitting, it is convenient to arrange electronic components in the cavity formed by the snap-fitting of the upper housing 52111 and the lower housing 52112. The upper housing 52111 and the lower housing 52112 can protect the electronic components and prevent dust and water vapor from entering and affecting the electronic components.

As shown in FIG. 7, in some examples, multiple protrusions 531 are disposed on the surface of the housing 5211, and each dimension of each protrusion 531 is less than or equal to 10 cm. Each dimension of each protrusion 531 may be 1 cm, 1.5 cm, 2 cm, 2.5 cm, 3 cm, 3.5 cm, or the like, and no further restrictions are imposed herein. The dimension of the protrusion 531 is limited to prevent the protrusion 531 from being too large. The multiple protrusions 531 may be designed to be of the same dimensions to ensure overall consistency, or the protrusions 531 may be designed to have different dimensions according to different hung items, thereby flexibly satisfying the usage requirements of users.

In some examples, the mounting assembly 53 includes a recess, and the recess is capable of matching a snap. By providing the recess, a fixed point that mates with the snap is formed. When the item is subsequently hung, the item is connected to the snap, and then the snap mates with the recess. By adopting the preceding method, the attachment such as the user's item can be effectively hung. The protrusion and the recess may be collectively referred to as the mounting portion.

In some examples, the attachment includes or is connected to the snap. In this manner, the attachment can be hung on the housing 5211 through the engagement of the snap with the recess.

In some examples, the attachment is a storage box, and the load-bearing capacity of the storage box is less than or equal to 10 kg. The load-bearing capacity of the storage box may be 1 kg, 1.5 kg, 2 kg, 2.5 kg, 3 kg, 3.5 kg, or the like. The storage box is fixed on the housing 5211 by using the recess and the snap so that the storage box has a certain storage space into which the user can place items such as water cups, mobile phones, and clothes.

When the user operates the walk-behind mower, to improve operational comfort and reduce operating fatigue, as shown in FIGS. 1 to 15, the present application provides a walk-behind mower. The walk-behind mower 500 includes a body 50 and an operating device 52. The operating device 52 includes a switch box 521, a first trigger 522, and a second trigger 523.

The body 50 includes a traveling assembly 503 and a cutting assembly 501. The operating device 52 is electrically connected to the body 50 to allow the user to operate the walk-behind mower 500 on the rear side of the walk-behind mower 500. Electronic components for controlling the working states of the cutting assembly 501 and the traveling assembly 503 are provided in the switch box 521. The first trigger 522 is configured to be operated by the user to rotate about a first pivot axis 526. The second trigger 523 is configured to be operated by the user to rotate about a second pivot axis 527. The second pivot axis 527 is basically parallel to the first pivot axis 526, or the second pivot axis 527 may coincide with the first pivot axis 526. The first trigger 522 and the second trigger 523 are configured to control the cutting assembly 501 and the traveling assembly 503, respectively. As shown in FIGS. 5 and 7, at least one of the first trigger 522 or the second trigger 523 is completely disposed on a side of a center plane 5213 of the switch box 521, and the length L4 of the grip of each of the first trigger 522 and the second trigger 523 in the lateral direction of the walk-behind mower 500 is greater than or equal to 5 cm. The length L4 of the grip of each of the first trigger 522 and the second trigger 523 in the lateral direction of the walk-behind mower 500 may be 5.5 cm, 6 cm, 6.5 cm, 7 cm, 7.5 cm, 8 cm, or the like. The length L4 of the grip of each of the first trigger 522 and the second trigger 523 is designed according to the model of the walk-behind mower 500 and the target user group, and no further restrictions are imposed herein.

When the user operates the first trigger 522 and the second trigger 523, since the first trigger 522 and the second trigger 523 are relatively long, the first trigger 522 and the second trigger 523 may be pressed with fingers for easy operation or may be held with the hand to reduce operating fatigue and improve operational comfort during long-term operation.

As shown in FIG. 1, in some examples, the operating device 52 includes two second triggers 523, and the two second triggers 523 are located on the left and right sides of the center plane 5213 of the switch box 521, respectively. By using two second triggers 523 with the same function, it is convenient for the user to operate the second trigger 523 with the left hand or the right hand, thereby being suitable for users with different hand habits. Furthermore, the two second triggers 523 are not connected to each other. Compared with an integrated second trigger, materials can be saved and the interference between the second triggers 523 and the switch box 521 can be avoided. In other examples, the two second triggers 523 may be integrated with different functions, thereby further enriching the control of the walk-behind mower 500.

As shown in FIG. 7, in some examples, the length L3 of the second trigger 523 in the lateral direction of the walk-behind mower 500 is less than or equal to 10 cm. The length L3 of the second trigger 523 in the lateral direction of the walk-behind mower 500 may be 6 cm, 7 cm, 8 cm, 9 cm, or 10 cm. By limiting the length of the second trigger 523, while it is ensured that the second trigger 523 is convenient for the user to operate or hold with fingers, the second trigger 523 is prevented from being too long, causing inconvenience in operation and wasting materials.

As shown in FIG. 7, in some examples, the operating device 52 further includes a speed control knob 525 disposed between the two second triggers 523. By providing the speed control knob 525, the speed control knob 525 can adjust the rotational speed of the cutting assembly 501, thereby adapting to different grasslands and the traveling speeds of different users. The speed control knob 525 may be designed with multiple gears, and the different rotational speeds of the cutting assembly 501 are controlled by adjusting the angle of the speed control knob 525. The preceding manner is adopted to ensure the flexibility of speed regulation.

As shown in FIG. 5, in some examples, the length L2 of the first trigger 522 in the lateral direction of the walk-behind mower 500 is greater than or equal to 30 cm, and the first trigger 522 is symmetrical about the center plane 5213. The length L2 of the first trigger 522 in the lateral direction of the walk-behind mower 500 may be 31 cm, 32 cm, 33 cm, 34 cm, 35 cm, or the like, and no further restrictions are imposed herein. By designing the first trigger 522 as an integrated structure which is relatively long, it is convenient for the user to simultaneously hold and operate the first trigger 522 with both hands while pushing the walk-behind mower 500 to work. In an example, the first trigger 522 is used for controlling the operation of the cutting assembly 501, so the user needs to continue operating the first trigger 522 until the operation is completed. The first trigger 522 is operated by both hands in the preceding manner, thereby reducing operating fatigue. In some examples, the functions and/or structural designs of the first trigger 522 and the second trigger 523 may be interchanged.

As shown in FIG. 5, in some examples, the switch box 521 is T-shaped and includes a cross beam 5212, and the first trigger 522 or the second trigger 523 is pivotally mounted to the cross beam 5212. Since the cross beam 5212 is relatively long, it is convenient to arrange the first trigger 522 and the second trigger 523 on the cross beam 5212.

As shown in FIG. 1, in some examples, when each of the first trigger 522 and the second trigger 523 is at the maximum angle of rotation, the first trigger 522 and the second trigger 523 can be held by the user with one hand at the same time. When the user operates the first trigger 522 and the second trigger 523 at the same time, the user only needs to rotate the first trigger 522 and the second trigger 523 to the maximum angle, and then the user can hold the first trigger 522 and the second trigger 523 with one hand at the same time.

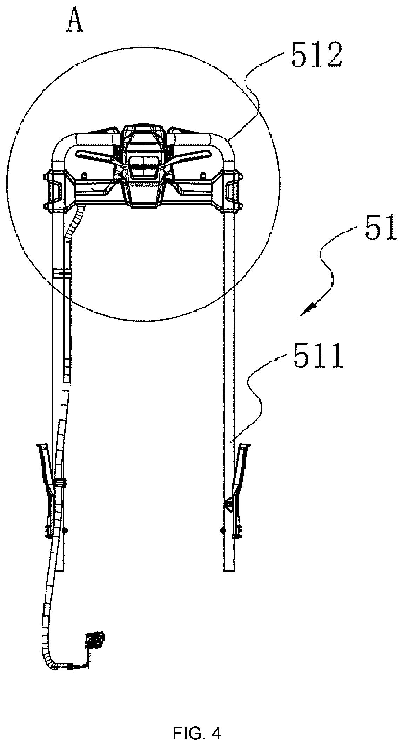

As shown in FIG. 4, in some examples, the walk-behind mower 500 includes a connecting rod assembly 51, and the connecting rod assembly 51 includes two first rods 511 connected to the body 50 and a second rod 512 connecting the two first rods 511. The connecting rod assembly 51 is connected to the body 50 so that through the connecting rod assembly 51, the user can push the walk-behind mower 500 to move and control the motion direction.

As shown in FIG. 5, in some examples, the maximum angles of rotation of the first trigger 522 and the second trigger 523 are both limited by the second rod 512. When the user operates the walk-behind mower 500, the user usually places the hands on the second rod 512 to push the walk-behind mower 500 to move. When the first trigger 522 and the second trigger 523 need to be operated at the same time, the first trigger 522 and the second trigger 523 need to be rotated until the first trigger 522 and the second trigger 523 are in contact with the second rod 512. In this manner, it is convenient for the user to control the walk-behind mower 500.

As shown in FIG. 1, in some examples, the first trigger 522 and/or the second trigger 523 are paddles. The first trigger 522 and/or the second trigger 523 are designed as paddles so that a lightweight design of the first trigger 522 and/or the second trigger 523 can be achieved, and the paddles can effectively fit the second rod 512, making it easier for the user to hold the paddles.

As shown in FIGS. 1 to 9, the present application further provides a walk-behind mower 500, and the walk-behind mower 500 includes a body 50, a connecting rod assembly 51, and an operating device 52.

The body 50 includes a traveling assembly 503 and a cutting assembly 501. The connecting rod assembly 51 includes two first rods 511 connected to the body 50 and a second rod 512 connecting the two first rods 511. The operating device 52 is electrically connected to the body 50 to allow the user to operate the walk-behind mower 500 on the rear side of the walk-behind mower 500. The operating device 52 includes a switch box 521, a first trigger 522, and a second trigger 523. The switch box 521 is mounted to the connecting rod assembly 51. Electronic components for controlling the working states of the cutting assembly 501 and the traveling assembly 503 are provided in the switch box 521. The first trigger 522 is configured to be operated by the user to rotate about a first pivot axis 526. The second trigger 523 is configured to be operated by the user to rotate about a second pivot axis 527. The second pivot axis 527 is basically parallel to the first pivot axis 526, or the second pivot axis 527 may coincide with the first pivot axis 526. The first trigger 522 and the second trigger 523 are configured to control the cutting assembly 501 and the traveling assembly 503, respectively. At least one of the first trigger 522 or the second trigger 523 is completely disposed on a side of a center plane 5213 of the switch box 521, and the maximum angles of rotation of the first trigger 522 and the second trigger 523 are both limited by the second rod 512.

When the user operates the walk-behind mower 500, the user's hands act on the second rod 512. At this time, the user may press the first trigger 522 and the second trigger 523 with fingers for easy operation, or the first trigger 522 and the second trigger 523 may be rotated until the first trigger 522 and the second trigger 523 are in contact with the second rod 512 and held by the hand, thereby reducing operating fatigue and improving operational comfort.

In some examples, the first trigger 522 and the second trigger 523 have opposite directions of rotation. The first trigger 522 and the second trigger 523 are located on two sides of the second rod 512. When the first trigger 522 and the second trigger 523 are operated, the first trigger 522 and the second trigger 523 rotate toward each other and stop at the second rod 512 so that the user can hold the first trigger 522 and the second trigger 523 conveniently.

In some examples, the maximum angles of rotation of the first trigger 522 and the second trigger 523 are each less than or equal to 90°. The maximum angles of rotation of the first trigger 522 and the second trigger 523 may each be 10°, 20°, 30°, 40°, 50°, 60°, 70°, 80°, or 90°, and no further restrictions are imposed herein. By limiting the maximum angles of rotation of the first trigger 522 and the second trigger 523, it is convenient for the user to operate the first trigger 522 and the second trigger 523.

As shown in FIGS. 1 and 5, in some examples, the first trigger 522 and the second trigger 523 are disposed on two sides of the plane where the switch box 521 is located, respectively. In this manner, when the user operates the first trigger 522 and the second trigger 523, the first trigger 522 and the second trigger 523 do not affect each other so that the user can control the first trigger 522 and the second trigger 523 separately or simultaneously.

As shown in FIG. 5, in some examples, the curvature of at least one of the first trigger 522 and the second trigger 523 is similar to the curvature of at least part of the second rod 512. The curvature refers to that at least one of the first trigger 522 and the second trigger 523 is in a curved state along the lateral direction, or at least one of the first trigger 522 and the second trigger 523 has an arc-shaped surface facing the second rod. In this manner, when the user operates the trigger having a curvature similar to that of the second rod 512, the trigger can fit the second rod 512 so that the user can hold the trigger conveniently.

In some examples, at least one of the first trigger 522 and the second trigger 523 is made of plastic. By using plastic materials, weight can be reduced to achieve a lightweight design. Moreover, plastic has good anti-aging properties and can avoid weathering during long-term outdoor use.

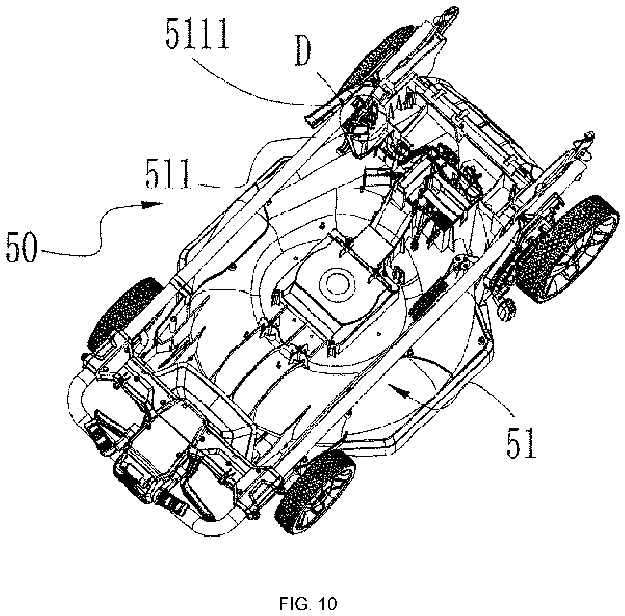

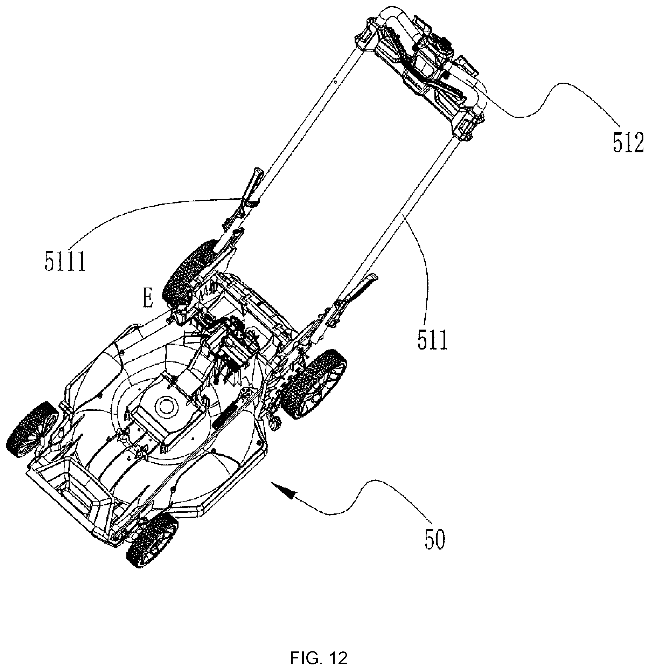

As shown in FIGS. 10 and 12, in some examples, the first rod 511 of the connecting rod assembly 51 is rotatably connected to the body 50, and the connecting rod assembly 51 has a working position and a storage position relative to the body 50. When the connecting rod assembly 51 is at the working position, the second rod 512 is located at the rear of the body 50 so that through the second rod 512, the user can push the walk-behind mower 500 to work. When the connecting rod assembly 51 is at the storage position, the second rod 512 is located at the head of the body 50 so that the connecting rod assembly 51 is folded, thereby reducing the occupied storage space.

As shown in FIGS. 10 to 13, in some examples, a safety switch 54 is disposed on the body 50, and a switch trigger 5111 is disposed on the connecting rod assembly 51. When the connecting rod assembly 51 is at the working position, the safety switch 54 is not triggered, and the body 50 can work normally. When the connecting rod assembly 51 is at the storage position in the folded state, the switch trigger 5111 triggers the safety switch 54 so that the body 50 cannot be started. In this manner, it can be ensured that when the walk-behind mower 500 is at the storage position in the folded state, the body 50 cannot work, thereby ensuring safety.

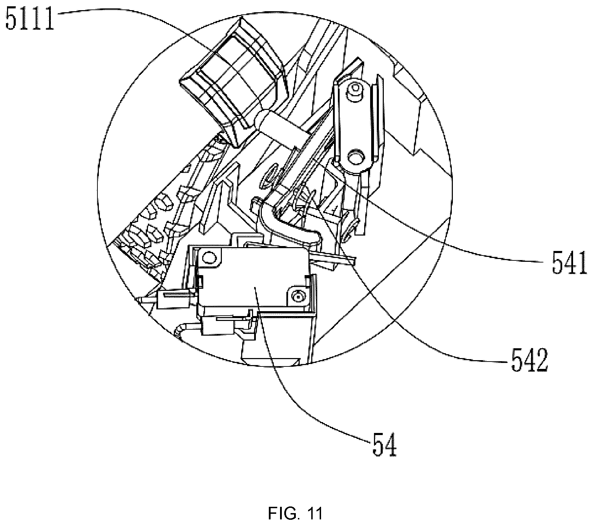

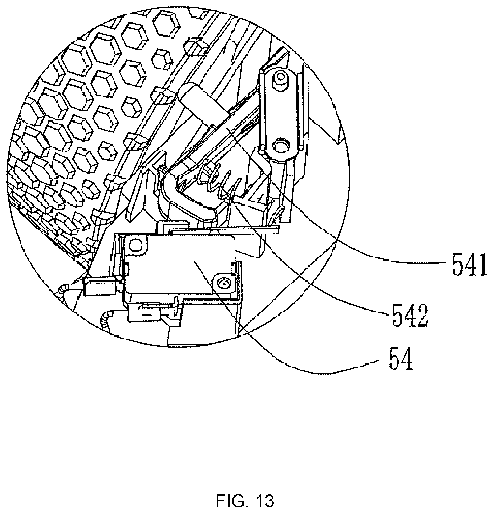

As shown in FIGS. 10 to 13, in some examples, the safety switch 54 is a contact sensor, a lever 541 is rotatably disposed on the body 50, and an elastic member 542 is disposed between the lever 541 and the body 50. As shown in FIGS. 10 and 11, when the connecting rod assembly 51 is at the storage position in the folded state, the switch trigger 5111 presses the lever 541, and the lever 541 rotates to trigger the safety switch 54, thereby making the body 50 unable to start. As shown in FIGS. 12 and 13, when the connecting rod assembly 51 switches from the storage position to the working position, the elastic member 542 pushes the lever 541 to reset the lever 541, the safety switch 54 is released from triggering, and the body 50 can work normally.

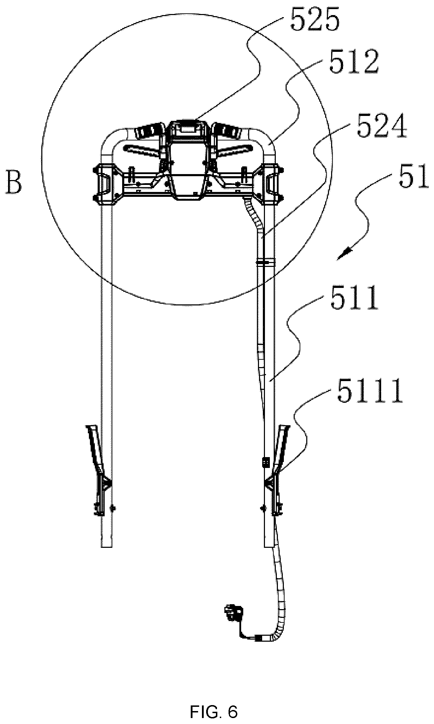

As shown in FIG. 6, in some examples, the switch trigger 5111 is mounted on the first rod 511, the switch trigger 5111 has a snap groove, and the wire harness 524 of the walk-behind mower 500 is fixed on the first rod 511 through the snap groove. By providing the snap groove on the switch trigger 5111 to serve as a wire clip, it is convenient to fix the wire harness 524.

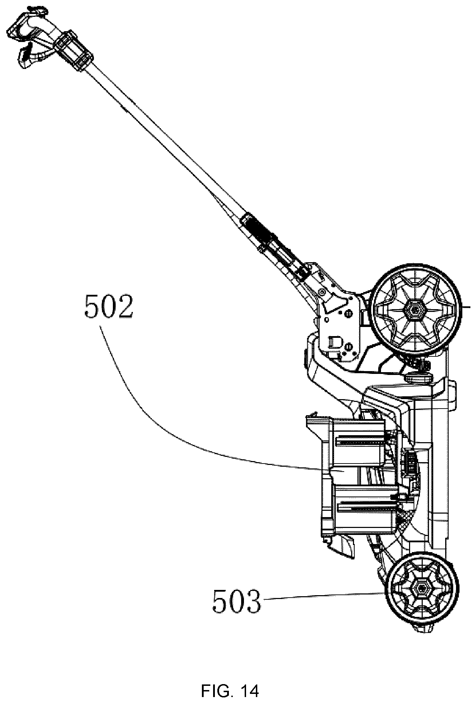

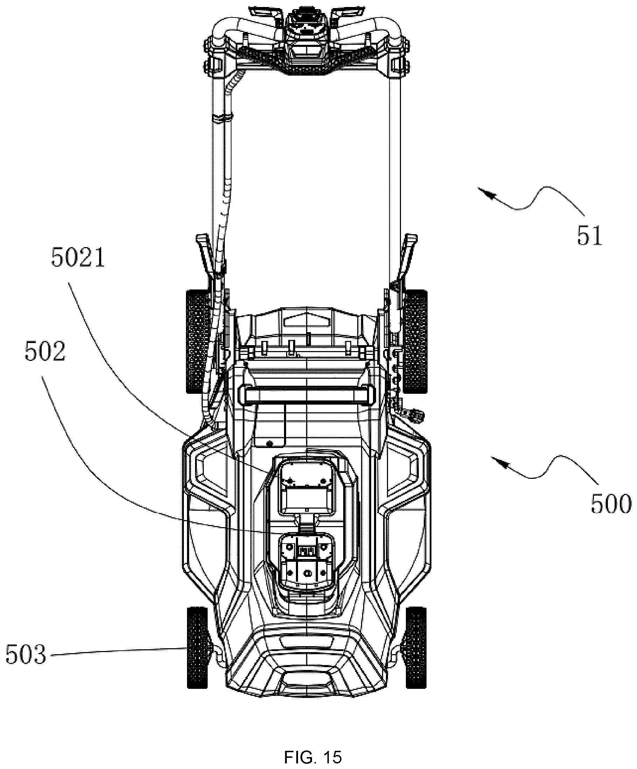

As shown in FIGS. 14 and 15, in some examples, a battery compartment assembly 502 of the walk-behind mower 500 is mounted independently and fixedly connected to the base plate of the walk-behind mower 500 from top to bottom by multiple screws 5021. The battery compartment assembly 502 may be fixed by tightening the screws 5021 from the front, without having to flip the body 50 over to fix the battery compartment assembly 502 from the bottom of the base plate. Therefore, production efficiency can be improved, manufacturing costs can be saved, product costs can be reduced, and the maintenance convenience of the battery compartment assembly 502 can be improved.

In some examples, the battery compartment assembly 502 is electrically connected to the switch box 521 via the wire harness 524. By moving the switch box 521 from the body 50 to the connecting rod assembly 51, a space for accommodating two battery compartments or a storage compartment can be provided.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A walk-behind mower, comprising:
a body (50) comprising a traveling assembly (503) and a cutting assembly (501);
an operating device (52) electrically connected to the body (50) to allow a user to operate the walk-behind mower (500) on a rear side of the walk-behind mower (500), wherein the operating device (52) comprises a switch box (521), wherein an electronic component at least for controlling a working state of the cutting assembly (501) is provided in the switch box (521); and
a grass collecting basket (55) selectively connected to the body (50) and configured to collect grass clippings generated by cutting, wherein a length of the grass collecting basket (55) in a lateral direction of the walk-behind mower (500) is a width of the grass collecting basket (55);
wherein the walk-behind mower further comprises:
a mounting assembly (53) comprising at least one protrusion (531) disposed on the switch box (521) and used for mounting an attachment, wherein a span of the mounting assembly (53) in the lateral direction of the walk-behind mower (500) is greater than or equal to 5 cm and less than the width of the grass collecting basket (55).

2. The walk-behind mower of claim 1, wherein a protrusion (531) of the at least one protrusion (531) comprises a stiffener, and a load-bearing capacity of the protrusion (531) is greater than or equal to 1 kg.

3. The walk-behind mower of claim 1, wherein the mounting assembly (53) comprises two protrusions (531), and a distance between the two protrusions (531) is greater than 5 cm.

4. The walk-behind mower of any one of claims 1 to 3, wherein each dimension of a protrusion (531) of the at least one protrusion (531) is less than or equal to 10 cm.

5. The walk-behind mower of any one of claims 1 to 3, wherein the mounting assembly (53) is symmetrical about a centerline of the switch box (521).

6. The walk-behind mower of any one of claims 1 to 3, wherein the switch box (521) comprises a housing (5211), and the at least one protrusion (531) is integrally formed with the housing (5211).

7. The walk-behind mower of any one of claims 1 to 3, wherein the switch box (521) is T-shaped and comprises a cross beam (5212), and the at least one protrusion (531) is disposed on the cross beam (5212).

8. The walk-behind mower of any one of claims 1 to 3, wherein an included angle between a protrusion (531) of the at least one protrusion (531) and a plane where the switch box (521) is located is greater than or equal to 0° and less than or equal to 90°.

9. The walk-behind mower of any one of claims 1 to 3, wherein the grass collecting basket (55) comprises a frame (551), and the frame (551) is capable of being hung on the mounting assembly (53).

10. The walk-behind mower of any one of claims 1 to 3, wherein the operating device (52) is disposed on a connecting rod assembly (51) of the walk-behind mower (500), the connecting rod assembly (51) is foldable to a storage state.

11. The walk-behind mower of claim 10, wherein when the walk-behind mower (500) is in the storage state and the grass collecting basket (55) is hung on the mounting assembly (53), a rear opening of the grass collecting basket (55) faces upward.

12. The walk-behind mower of claim 11, wherein the mounting assembly (53) is disposed on a back side of the switch box (521).

## Amended claims

### Amended claims in accordance with Rule 137(2) EPC.

1. A walk-behind mower, comprising:
a body (50) comprising a traveling assembly (503) and a cutting assembly (501);
an operating device (52) electrically connected to the body (50) to allow a user to operate the walk-behind mower (500) on a rear side of the walk-behind mower (500),
wherein the operating device (52) comprises a switch box (521), wherein an electronic component at least for controlling a working state of the cutting assembly (501) is provided in the switch box (521); and
a grass collecting basket (55) selectively connected to the body (50) and configured to collect grass clippings generated by cutting, wherein a length of the grass collecting basket (55) in a lateral direction of the walk-behind mower (500) is a width of the grass collecting basket (55);
wherein the walk-behind mower further comprises:
a mounting assembly (53) comprising at least one mounting portion disposed on the switch box (521) and used for mounting an attachment, wherein a span of the mounting assembly (53) in the lateral direction of the walk-behind mower (500) is greater than or equal to 5 cm and less than the width of the grass collecting basket (55); and
wherein the operating device (52) is disposed on a connecting rod assembly (51) of the walk-behind mower (500), and the connecting rod assembly (51) is foldable to a storage state; **characterized in that**
the grass collecting basket (55) comprises a frame (551), and the frame (551) is capable of being hung on the mounting assembly (53);
wherein when the walk-behind mower (500) is in the storage state and the grass collecting basket (55) is hung on the mounting assembly (53), an opening of the grass collecting basket (55) faces upward.

2. The walk-behind mower of claim 1, wherein a protrusion (531) of the at least one protrusion (531) comprises a stiffener, and a load-bearing capacity of the protrusion (531) is greater than or equal to 1 kg.

3. The walk-behind mower of claim 1, wherein the mounting assembly (53) comprises two protrusions (531), and a distance between the two protrusions (531) is greater than 5 cm.

4. The walk-behind mower of any one of claims 1 to 3, wherein each dimension of a protrusion (531) of the at least one protrusion (531) is less than or equal to 10 cm.

5. The walk-behind mower of any one of claims 1 to 3, wherein the mounting assembly (53) is symmetrical about a centerline of the switch box (521).

6. The walk-behind mower of any one of claims 1 to 3, wherein the switch box (521) comprises a housing (5211), and the at least one protrusion (531) is integrally formed with the housing (5211).

7. The walk-behind mower of any one of claims 1 to 3, wherein the switch box (521) is T-shaped and comprises a cross beam (5212), and the at least one protrusion (531) is disposed on the cross beam (5212).

8. The walk-behind mower of any one of claims 1 to 3, wherein an included angle between a protrusion (531) of the at least one protrusion (531) and a plane where the switch box (521) is located is greater than or equal to 0° and less than or equal to 90°.

9. The walk-behind mower of claim 1, wherein the mounting assembly (53) is disposed on a back side of the switch box (521).
